# FASCICULE DE BREVET EUROPEEN

(11) **EP 2 369 698 B1**
(45) Date de publication et mention de la délivrance du brevet: **11.03.2015**
(21) Numéro de dépôt: 11290094.9
(22) Date de dépôt: 17.02.2011
(51) Int. Cl.: H02B 1/42

(54) **Support de rail de montage d'appareillages électriques dans un coffret électrique**
Schienenauflagerung zur Montage von elektrischen Geräten in einem elektrischen Schaltkasten
Bracket of a rail for mounting electrical switchgear in a switch box

(30) Priorité: 22.03.2010 FR 1001120
(43) Date de publication de la demande: 28.09.2011
(73) Titulaire: Legrand France, 87000 Limoges (FR)
(72) Inventeur: Baudou, Alain, 87000 Limoges (FR)
(74) Mandataire: Orsini, Fabienne

(56) Documents cités:
- EP-A1- 1 359 650
- EP-A1- 1 615 308

## Description

### DOMAINE TECHNIQUE AUQUEL SE RAPPORTE L'INVENTION

La présente invention concerne de manière générale les coffrets et tableaux de distribution électrique.

Elle concerne plus particulièrement un support de rail tel que défini dans le préambule de la revendication 1.

Elle concerne également un coffret ou tableau de distribution électrique comportant un châssis, un rail de montage d'appareillages électriques modulaires, et deux supports de rail tels que précité montés sur le châssis et supportant les deux extrémités du rail de montage.

### ARRIÈRE-PLAN TECHNOLOGIQUE

Dans les coffrets et tableaux de distribution électrique du type précité, il est généralement prévu au moins deux rails de montage positionnés parallèlement et à distance l'un de l'autre pour porter des appareillages électriques modulaires sur deux rangées d'appareillages espacées l'une de l'autre.

Les entrées de conducteurs électriques des appareillages électriques modulaires de l'une des rangées sont alors tournées vers l'autre rangée. Or, la distance laissée libre entre les deux rangées est généralement réduite, de l'ordre de 40 à 90 millimètres.

Par conséquent, ces entrées de conducteurs électriques sont non seulement difficilement visualisables, mais en outre difficilement accessibles lorsque l'on souhaite y brancher des conducteurs électriques relativement rigides. Le branchement des conducteurs électriques dans les appareillages électriques modulaires étant dès lors complexe à réaliser, la connexion électrique qui en résulte est souvent de piètre qualité et génère des pertes résistives et des échauffements importants.

Une solution connue du document EP 1 615 308 pour faciliter le branchement des conducteurs électriques consiste alors à monter chaque rail de montage de manière amovible dans le coffret ou tableau de distribution électrique, par exemple au moyen de deux supports de rail du type précité.

Dans ce document, les surfaces d'appui des leviers de déverrouillage des deux supports de rails s'étendent globalement perpendiculairement aux faces d'accueil des plates-formes et sont tournées à l'opposée l'une de l'autre, vers l'extérieur du châssis du coffret de distribution électrique.

Grâce à ces leviers de déverrouillage, il est ainsi possible d'extraire le rail de montage hors du coffret ou tableau de distribution électrique afin de dégager les entrées des appareillages électriques modulaires qu'il porte lorsque l'on souhaite y connecter des conducteurs électriques.

L'inconvénient de ces supports de rail est que, pour extraire le rail de montage hors du coffret ou tableau de distribution électrique, il est nécessaire simultanément, d'une part, d'appuyer sur les leviers de déverrouillage des deux supports de rail selon deux directions différentes, et, d'autre part, de tirer le rail de montage suivant une troisième direction orthogonale aux deux premières directions.

Ces opérations simultanées sont difficiles à réaliser, ce qui en pratique risque de dissuader l'installateur d'extraire les rails de montage hors du coffret ou tableau de distribution électrique pour brancher les conducteurs électriques dans les appareillages électriques modulaires.

### OBJET DE L'INVENTION

Afin de remédier à l'inconvénient précité de l'état de la technique, la présente invention propose un support de rail facilitant l'extraction du support de rail hors du coffret ou tableau de distribution électrique.

Plus particulièrement, l'invention propose un support de rail tel que défini dans la revendication 1.

Ainsi, grâce à l'invention, la surface d'appui est tournée à l'opposé de la direction d'extraction du rail de montage hors du coffret ou tableau de distribution électrique. L'appui sur ce levier provoque donc de manière simultanée, d'une part, le déverrouillage du pied, et, d'autre part, l'extraction du support de rail.

Autrement formulé, pour extraire le rail hors du coffret ou tableau de distribution électrique, il suffit à l'installateur de pincer avec son pouce et son index la surface d'appui du levier de déverrouillage et la face d'accueil de la plate-forme et de tirer l'ensemble à distance du châssis.

L'ergonomie apportée par ce support de rail incitera donc l'installateur à extraire le rail avant de brancher les conducteurs électriques dans les appareillages électriques modulaires, au bénéfice de la qualité de la connexion électrique de l'ensemble.

Avantageusement, ladite surface d'appui s'étendant dans un premier plan moyen et ladite face d'accueil s'étendant dans un second plan moyen, lesdits premier et second plans moyens sont inclinés l'un par rapport à l'autre d'un angle d'inclinaison qui est variable lorsque le levier de déverrouillage se déplace depuis sa position de repos jusqu'à sa position d'activation et qui reste constamment compris entre 0 et 45 degrés.

On entend ici par « plan moyen » le plan qui présente une distance moyenne à la face considérée qui est minimale.

D'autres caractéristiques avantageuses et non limitatives du support de rail conforme à l'invention sont définies dans les revendications 3 à 12.

L'invention concerne également un coffret ou tableau de distribution électrique tel que défini dans la revendication 13.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective éclatée d'une partie d'un châssis d'un coffret de distribution électrique, d'un support de rail selon l'invention et d'un des rails de montage d'appareillages électriques modulaires ;
- la figure 2 est une vue schématique en perspective d'une partie du châssis de la figure 1 ;
- la figure 3 est une vue schématique assemblée du support de rail et du rail de montage de la figure 1 ;
- la figure 4 est une vue schématique assemblée du châssis, du support de rail et du rail de montage de la figure 1 ;
- la figure 5 est une vue schématique en perspective coupée selon le plan A-A de la figure 4 ; et
- la figure 6 est une vue schématique de côté du support de rail de la figure 1.

Un coffret ou tableau de distribution électrique est un appareil électrique qui permet, d'une part, de répartir le courant provenant d'un réseau électrique extérieur vers chacun des circuits du réseau électrique local d'une habitation, et, d'autre part, de couper l'alimentation de ces circuits en cas de surintensité.

Ce coffret ou tableau de distribution électrique se présente généralement sous la forme d'un boîtier logeant des appareillages électriques modulaires, tels que des disjoncteurs. Il comporte à cet effet un châssis à fixer à une paroi murale, un à quatre rails de montage à fixer horizontalement sur le châssis, et un capot de fermeture.

Les rails de montage sont prévus pour supporter les appareillages électriques modulaires. Le capot de fermeture est quant à lui conçu pour protéger ces appareillages électriques modulaires. Il comporte à cet effet généralement une paroi avant plane présentant des ouvertures d'accès aux appareillages électriques modulaires portés par les rails de montage, et une paroi latérale agencée pour se fixer au châssis.

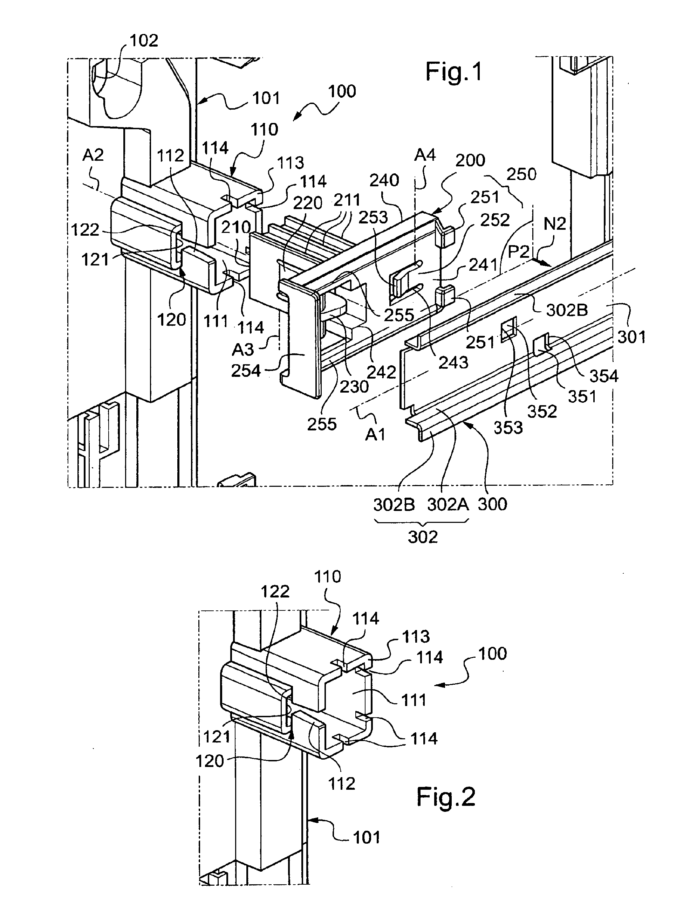

Sur la figure 1, on a représenté une partie du châssis 100 du coffret de distribution électrique. Tel que représenté sur cette figure, le châssis 100 comporte un socle 101 à rapporter sur une paroi murale au moyen de vis de fixation (non représentées).

Ce socle est ici formé de deux longerons 101 positionnés verticalement et côte-à-côte sur la paroi murale. Chacun de ces longerons 101 comporte deux ouvertures 102 d'accueil d'une vis de fixation, respectivement situées à ses deux extrémités. Ces deux longerons 101 sont chacun réalisés d'une seule pièce, par moulage d'une matière plastique.

En variante, ce socle pourrait se présenter sous une forme différente, telle que sous la forme d'une plaque rectangulaire présentant quatre ouvertures d'accueil de vis de fixation, respectivement situées à ses quatre coins.

Sur cette figure 1, on a également représenté une partie de l'un des rails de montage 300 à rapporter sur le châssis 100.

Comme le montre cette figure, ce rail de montage 300 se présente sous la forme d'un profilé métallique. Il comporte plus précisément une paroi principale 301 plane et rectangulaire, qui est allongée suivant un axe de montage A1 et dont les deux bords latéraux sont repliés vers l'avant du rail de montage 300 pour former deux ailes latérales 302. Ces ailes latérales 302 présentent chacune une section transversale en L, avec une partie 302A qui s'élève à partir de la paroi principale 301, orthogonalement à celle-ci, et une partie 302B repliée à angle droit vers l'extérieur du rail de montage 300.

Chaque rail de montage 300 est conçu pour être positionné horizontalement entre les deux longerons 101 du châssis 100. Les deux extrémités de chacun de ces rails de montage 300 sont à cet effet agencées pour être rigidement fixées aux longerons 101 au moyen de deux supports de rail 200.

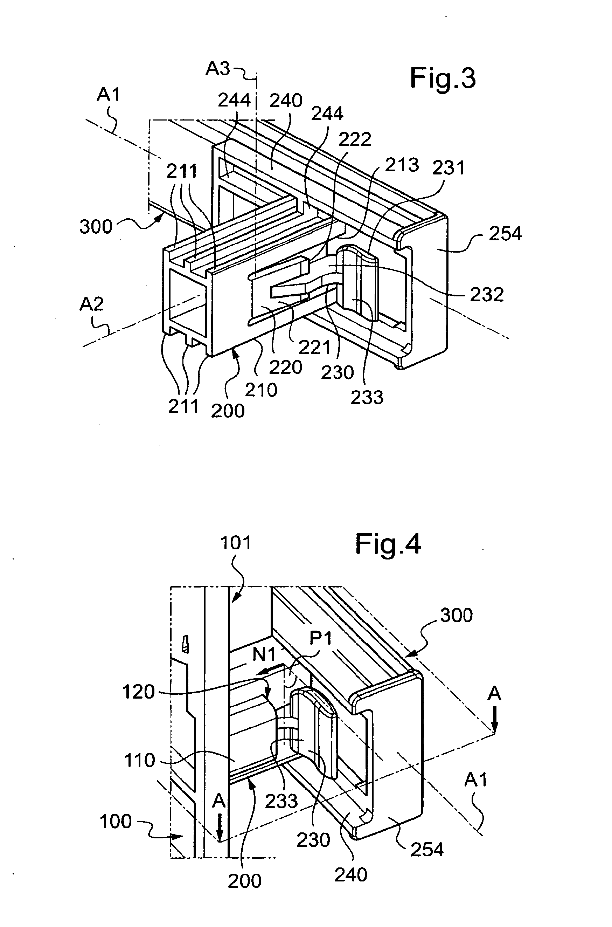

Ces supports de rail 200 sont préférentiellement tous identiques, au bénéfice de leur coût de fabrication. La suite de cet exposé portera donc plus particulièrement sur l'un d'entre eux, représenté en détail sur les figures 1 et 3.

Ce support de rail 200 se présente sous la forme d'une pièce monobloc en forme de T, comportant un pied 210 à rapporter sur l'un des longerons 101 du châssis 100 et une plate-forme 240 d'accueil de l'une des extrémités du rail de montage 300.

Le pied 210 est à cet effet équipé de moyens de verrouillage 220 sur le châssis 100, tandis que la plate-forme 240 présente une face plane tournée à l'opposé du pied 210, appelée face d'accueil 241, qui est agencée pour bloquer le rail de montage 300 sur le support de rail 200.

Le pied 210 comporte également un levier de déverrouillage 230 agencé pour manoeuvrer les moyens de verrouillage 220. Ce levier de déverrouillage 230 est monté mobile par rapport au pied 210 entre une position de repos dans laquelle les moyens de verrouillage 220 sont en position pour verrouiller le pied 210 sur le châssis 100 et une position d'activation dans laquelle les moyens de verrouillage 220 sont en position pour libérer le pied 210 du châssis 100.

Ce levier de déverrouillage 230 présente une surface d'appui 233 accessible au doigt de l'installateur, qui permet de faciliter sa manipulation lorsque l'installateur souhaite le déplacer depuis sa position de repos jusqu'à sa position d'activation.

Selon une caractéristique particulièrement avantageuse de l'invention, la surface d'appui 233 du levier de déverrouillage 230 et la face d'accueil 241 de la plate-forme 240 sont tournées dos-à-dos, en particulier lorsque le levier de déverrouillage 230 est en position d'activation.

Elles sont préférentiellement tournées dos-à-dos quelle que soit la position du levier de déverrouillage 230.

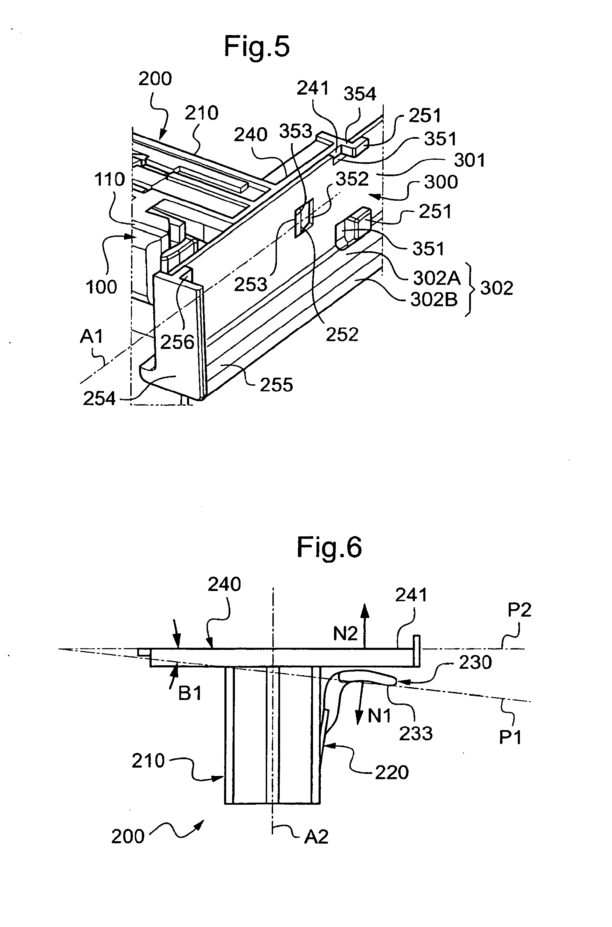

Comme le montre la figure 6, en considérant le plan moyen P1 de la surface d'appui 233 du levier de déverrouillage 230 et le plan P2 de la face d'accueil 241 de la plate-forme 240, la normale N1 au plan moyen P1 est orientée dans une direction sensiblement opposée à celle de la normale N2 au plan P2, si bien que ces deux normales N1, N2 forment ensemble un angle plat ou obtus.

Ainsi, le levier de déverrouillage 230 est agencé de telle manière que pour le déplacer depuis sa position de repos jusqu'à sa position d'activation, il suffit à l'installateur de pincer le levier de déverrouillage 230 contre la plate-forme 240 (avec l'index et le pouce d'une même main), ce qui rend la manoeuvre des moyens de verrouillage 220 particulièrement ergonomique.

Comme le montrent plus particulièrement les figures 2 et 3, le pied 210 du support de rail 200 forme ici un coulisseau agencé pour s'engager et coulisser dans un montant 110 prévu en correspondance sur l'un des longerons 101 du châssis 100.

Ce pied 210 se présente à cet effet sous la forme d'une poutre creuse de section transversale rectangulaire, s'étendant en longueur à partir de la face arrière de la plate-forme 240, suivant un axe longitudinal A2 orthogonal au plan P2 de cette plate-forme 240.

Ce pied 210 est ici flanqué, sur deux de ses faces latérales opposées, de trois nervures 211 s'étendant suivant l'axe longitudinal A2, à partir de la face arrière de la plate-forme 240 jusqu'à l'extrémité libre du pied 210.

Le montant 110 du châssis 100 se présente quant à lui sous la forme d'un conduit creux de section rectangulaire s'élevant à partir de la face avant du longeron 101 correspondant du châssis 100, sur une hauteur strictement inférieure à la longueur du pied 210.

Ce montant 110 définit intérieurement un logement d'accueil 111 du pied 210, qui présente une section transversale de dimensions égales, au jeu près, aux dimensions correspondantes du pied 210.

De cette manière, le support de rail 200 peut être rapporté sur le châssis 100 en engageant son pied 210 dans le montant 110 suivant l'axe longitudinal A2, de telle sorte que le pied 210 coulisse dans le logement d'accueil 111 défini par le montant 110.

Tels que représentés sur les figures 2 et 3, les moyens de verrouillage 220 du pied 210 sur le châssis 100 comportent ici des moyens pour bloquer le coulissement du pied 210 dans le logement d'accueil 111.

Ces moyens de verrouillage comportent plus précisément ici des moyens d'encliquetage 220 agencés pour coopérer avec des moyens d'encliquetage complémentaires 120 prévus en correspondance sur le châssis 100.

Comme le montre plus particulièrement la figure 3, ces moyens d'encliquetage 220 comportent, sur l'un des côtés de la face latérale du pied 210, une languette d'encliquetage 221.

Cette languette d'encliquetage 221 s'étend dans un renfoncement 213 prévu en creux dans la face latérale du pied 210. Elle présente une forme rectangulaire et est élastiquement déformable. Elle présente un bord d'extrémité qui est rattaché à la paroi latérale du pied 210 et qui forme une charnière de pivotement autour d'un axe de pivot A3 orthogonal à l'axe longitudinal A1, et un bord d'extrémité libre 222 opposé qui s'étend en direction de la plate-forme 240. Au repos, cette languette d'encliquetage 221 s'étend dans un plan incliné par rapport au côté correspondant de la face latérale du pied 210, en formant avec celui-ci un angle non nul sensiblement égal à 10 degrés. Par conséquent, au repos, le bord d'extrémité libre 222 de la languette d'encliquetage 221 s'étend en saillie de la paroi latérale du pied 210.

Grâce au renfoncement 213, lorsque l'installateur engage le pied 210 du support de rail 200 dans le montant 110 du châssis 100, la languette d'encliquetage 221 vient au contact du bord d'extrémité 113 du montant 110 et fléchit pour s'effacer à l'intérieur de ce renfoncement 213, si bien qu'elle ne forme pas obstacle au coulissement du pied 210 dans le logement d'accueil 111 défini par le montant 110.

Comme le montre la figure 2, les moyens d'encliquetage complémentaires 120 prévus en correspondance sur le châssis 100 comportent, dans le côté du montant 110 qui est tourné vers l'extérieur du châssis 100, un renfoncement 121 qui forme un creux dans la face intérieure de ce côté du montant 110 et une bosse sur la face extérieure de ce côté du montant. Ce renfoncement 121 permet à la languette d'encliquetage 221 de revenir en position de repos lorsque le pied 210 est engagé en butée contre le fond du logement d'accueil 111 défini par le montant 110.

Ce renfoncement 121 délimite en particulier un bord d'accroche 122 parallèle au fond du logement d'accueil 111, qui est tourné vers celui-ci. Ce bord d'accroche 122 est positionné sur le montant 110 à une distance du fond du logement d'accueil 111 qui est égale, au jeu près, à la distance séparant le bord d'extrémité libre 222 de la languette d'encliquetage 221 et l'extrémité libre du pied 210.

De cette manière, une fois le pied 210 engagé en butée contre le fond du logement d'accueil 111, le creux délimité par le renfoncement 122 permet à la languette d'encliquetage 221 de revenir en position de repos, de telle manière que son bord d'extrémité libre 222 vienne en appui contre le bord d'accroche 122 du montant 110, bloquant ainsi rigidement le pied 210 dans le montant 110.

Le levier de déverrouillage 230 permet alors de débloquer le pied 210, en exerçant sur la languette d'encliquetage 221 un effort suffisant pour la pousser dans le renfoncement 213 du pied 210, de manière à ce qu'elle ne forme pas obstacle à l'extraction du pied 210 hors du logement d'accueil 111 défini par le montant 110.

Ce levier de déverrouillage 230 comporte à cet effet une partie d'appui 231 accessible au doigt de l'installateur, et une partie de jonction 232 qui raccorde cette partie d'appui 231 à la languette d'encliquetage 221.

La partie d'appui se présente sous la forme d'une plaquette 231 légèrement courbée, dont la face arrière porte ladite surface d'appui 233. La courbe de cette plaquette 231 est prévue de telle manière que la surface d'appui 233 épouse au mieux la forme du doigt de l'installateur.

Cette plaquette 231 est plus précisément orientée par rapport au pied 210 du support de rail 200 de telle manière que lorsque le levier de déverrouillage 230 est en position de repos, le plan moyen P1 de la surface d'appui 233 (figure 4) s'étend sensiblement parallèlement au plan P2 de la face d'accueil 241 de la plate-forme 240 (figure 1).

Ainsi, lorsque le levier de déverrouillage 230 est en position d'activation, le plan moyen P1 de la surface d'appui 233 est incliné d'environ 10 degrés par rapport au plan P2 de la face d'accueil 241 de la plate-forme 240.

De cette manière, l'angle d'inclinaison B1 du plan moyen P1 par rapport au plan P2 varie en restant constamment compris entre 0 et 10 degrés, ce qui permet à la surface d'appui 233 de conserver une orientation telle que la manipulation du levier de déverrouillage 230 reste ergonomique quelle que soit sa position.

La partie de liaison qui raccorde la plaquette 231 à la languette d'encliquetage 221 se présente quant à elle ici sous la forme d'une nervure rigide 232 s'étendant depuis le bord de la plaquette 231 tourné vers le pied 210 jusqu'au milieu du bord d'extrémité libre 222 de la languette d'encliquetage 221.

Comme le montre la figure 2, le montant 110 du châssis 100 présente en correspondance une fente 112 dans laquelle peut coulisser la nervure rigide 232 du levier de déverrouillage 230, de telle sorte que celle-ci ne forme pas obstacle à l'engagement du pied 210 dans le logement d'accueil 111 défini par le montant 110.

Cette fente 112 s'étend ici sur le côté extérieur de la paroi latérale du montant 110, depuis le bord d'accroche 122 du renfoncement 121 prévu dans le montant 110 jusqu'au bord d'extrémité 113 de ce montant 110.

Tel que représenté sur la figure 2, le montant 110 du châssis 100 présente par ailleurs d'autres fentes 114 de dimensions réduites, s'étendant à partir du bord d'extrémité 113 de ce montant 110 vers l'arrière. Ces autres fentes 114 sont ici conçues pour accueillir des nervures de rigidification 244 prévues sur la face arrière de la plate-forme 240 du support de rail 200.

Comme le montrent plus particulièrement les figures 1 et 5, cette plate-forme 240 se présente sous la forme d'une plaque rectangulaire s'étendant dans un plan perpendiculaire à l'axe longitudinal A2 du pied 210. La face avant de cette plate-forme 240 forme alors ladite face d'accueil 241 de l'extrémité du rail de montage 300.

Cette plate-forme 240 présente une ouverture 242 en forme de T, qui est située au-dessus de la plaquette 231 du levier de déverrouillage 230 et qui évite que la plate-forme 240 ne forme obstacle au mouvement du levier de déverrouillage 230 depuis sa position de repos jusqu'à sa position d'activation.

Cette plate-forme 240 comporte des moyens de fixation 250 du rail de montage 300 sur sa face d'accueil 241.

On pourrait prévoir que ces moyens de fixation soient formés par une simple ouverture circulaire, bordée en face arrière par un puits de vissage dans lequel pourrait se visser une vis de fixation du rail de montage sur la plate-forme.

Ces moyens de fixation pourraient également comporter par exemple des moyens de clipsage, ou tout autre moyen de fixation connu de l'homme du métier.

Toutefois, ici, ces moyens de fixation 250 sont des moyens automatiques, aptes à fixer le rail de montage 300 sur la plate-forme 240 sans nécessiter aucun outillage ou accessoire.

Ces moyens de fixation 250 comportent à cet effet, d'une part, des moyens de crochetage 251 du rail de montage 300, et, d'autre part, des moyens de blocage automatique 252 - 255 du rail de montage 300 en position crochetée sur ladite face d'accueil 241.

Les moyens de crochetage comportent plus précisément deux crochets 251 identiques, qui s'étendent à partir du bord intérieur de la face d'accueil 241, celui tourné vers le support de rail supportant l'autre extrémité du rail de montage 300. Ces deux crochets 251 comportent une partie droite qui s'élève perpendiculairement à la face d'accueil 241, et une partie repliée à angle droit vers cet autre support de rail. Les deux crochets 251 pointent ainsi dans des directions parallèles.

Le rail de montage 300 comporte, en correspondance, deux ouvertures de crochetage 351 de formes carrées, présentant des largeurs égales, au jeu près, aux largeurs des parties repliées des crochets 251. Ainsi, lorsque l'installateur rapporte le rail de montage 300 sur la plate-forme 240, les crochets 251 passent au travers des deux ouvertures de crochetage 351 si bien que le rail de montage 300 peut correctement s'appliquer sur la face d'accueil 241 de la plate-forme 240.

Ces ouvertures de crochetage 351 présentent en particulier chacune un bord tourné vers l'extrémité correspondante du rail de montage 300, appelé bord d'appui 354, contre lequel la partie droite du crochet 251 correspondant s'appuie lorsque le rail de montage 300 est crocheté sur les crochets 251.

Les moyens de blocage automatique du rail de montage 300 comportent quant à eux une languette élastiquement déformable 252 apte à retenir le rail de montage 300 en position crochetée sur les crochets 251.

Cette languette élastiquement déformable 252 est logée dans une ouverture rectangulaire 243 prévue dans la plate-forme 240. Cette languette élastiquement déformable 252 présente une forme rectangulaire. Elle comporte un bord d'extrémité rattaché à la plate-forme 240 pour former une charnière de pivotement autour d'un axe de pivotement A4 (figure 1), et un bord d'extrémité libre 253 opposé tourné vers l'extérieur du châssis 100. Au repos, cette languette élastiquement déformable 252 est inclinée par rapport au plan P2 de la face d'accueil 241 de la plate-forme 240, de manière que son bord d'extrémité libre 253 s'étend en saillie de la face d'accueil 241.

Grâce à son élasticité, lorsque le rail de montage 300 est rapporté sur la plate-forme 240, la languette élastiquement déformable 252 se déforme et rentre à l'intérieur de l'ouverture rectangulaire 243, si bien que le rail de montage 300 peut correctement s'appliquer sur la face d'accueil 241 de la plate-forme 240.

Le rail de montage 300 comporte, en correspondance de cette languette élastiquement déformable 252, une ouverture de blocage 352 de forme rectangulaire, présentant une largeur égale, au jeu près, à la largeur de la languette élastiquement déformable 252.

Cette ouverture de blocage 352 est délimitée par quatre bords dont l'un d'entre eux, appelé bord d'appui 353, est situé à proximité de l'extrémité correspondante du rail de montage 300. Ce bord d'appui 353 est situé à une distance des bords d'appui 354 des ouvertures de crochetage 351 égale, au jeu près, à la distance séparant le bord d'extrémité libre 253 de la languette 252 et les faces intérieures des parties droites des crochets 251.

Ainsi, lorsque les crochets 251 sont en position crochetée sur le rail de montage 300, la languette élastiquement déformable 252 peut revenir en position de repos en s'engageant dans l'ouverture de blocage 352, de telle sorte que son bord d'extrémité libre 253 fasse saillie au-dessus de la face d'accueil 241 de la plate-forme 240 et s'appuie sur le bord d'appui 353 de l'ouverture de blocage 352. De cette manière, la languette élastiquement déformable 252 bloque rigidement le rail de montage 300 sur le support de rail 200.

Les moyens de blocage automatique du rail de montage 300 comportent ici en outre des butées fixes 254, 255, adaptées à optimiser la rigidité de la fixation du rail de montage 300 sur le support de rail 200.

Telles que représentées sur les figures 1 et 5, ces butées fixes comportent deux rebords latéraux 255, qui s'élèvent à partir des bords longitudinaux de la face d'accueil 241 de la plate-forme 240 pour former des appuis pour les ailes latérales 302 du rail de montage 300. Elles comportent également une paroi d'extrémité 254 qui s'élève à partir du bord extérieur de la face d'accueil 241 de la plate-forme 240 et qui forme un appui pour l'extrémité correspondante du rail de montage 300. Elles comportent enfin une nervure 256 (figure 5), qui s'étend le long de la face intérieure de cette paroi d'extrémité 254, parallèlement à la face d'accueil 241 et à une distance de celle-ci égale, au jeu près, à l'épaisseur de la paroi principale 301 du rail de montage 300. Cette nervure 256 permet ainsi de retenir l'extrémité du rail de montage 300 au contact de la face d'accueil 241 de la plate-forme 240.

Avantageusement, le support de rail 200 est formé d'une seule pièce par moulage d'une matière plastique isolante.

L'assemblage du rail de montage 300 (équipé de ses appareillages électriques modulaires) sur le châssis 100 du coffret de distribution électrique est réalisé de la manière suivante.

Au cours d'une première étape d'assemblage, un opérateur installe deux supports de rail 200 sur les deux extrémités du rail de montage 300. Il rapporte à cet effet la face d'accueil 241 de la plate-forme 240 de chaque support de rail 200 contre la face arrière de la paroi principale 301 du rail de montage 300, de telle manière que les crochets 251 des deux supports de rail 200 passent au travers des ouvertures de crochetage 351 du rail de montage 300. Il exerce ensuite un effort sur chaque support de rail 200 pour les translater le long de l'axe de montage A1, de telle sorte que la languette élastiquement déformable 252 de chaque support de rail 200 se clipse dans l'ouverture de blocage 352 correspondante du rail de montage 300.

Dans cette position, les supports de rail 200 sont rigidement bloqués sur le rail de montage 300.

Une fois le rail de montage 300 équipé de ses deux supports de rail 200, l'opérateur engage les pieds 210 des supports de rail 200 dans les logements d'accueil 111 définis par les montants 110 du châssis 100, jusqu'au fond de ceux-ci, de telle sorte que les moyens de verrouillage 220 des supports de rail 200 se clipsent dans les renfoncements 120 des montants 110 du châssis 100.

Dans cette position, le rail de montage 300 est rigidement fixé au châssis 100, prêt à être livré.

Une fois le châssis 100 livré, lorsque l'installateur souhaite connecter les appareillages électriques modulaires au réseau électrique local de l'habitation, il extrait ce rail de montage 300 des montants 110 du châssis 100. II exerce à cet effet un effort de traction sur les leviers de déverrouillage 230 des deux supports de rail 200, par exemple en pinçant avec l'index et le pouce de chacune de ses deux mains le levier de déverrouillage 230 contre le rail de montage 300. Cet effort de traction permet non seulement de déverrouiller les moyens de verrouillage 220 des deux supports de rail 200, mais en outre d'extraire les pieds 210 des deux supports de rail 200 hors des logements d'accueil 111 définis par les montants 110 du châssis 100.

Le démontage du rail de montage 300 facilite alors le branchement des appareillages électriques modulaires qu'il porte.

La présente invention n'est nullement limitée aux modes de réalisation décrit et représenté, mais l'homme du métier saura y apporter toute variante conforme à son esprit.

En particulier, on pourra prévoir que les montants du châssis se présentent sous la forme de tiges pleines et que les pieds des supports de rail se présentent sous la forme de tiges creuses à engager sur les tiges pleines du châssis. Dans cette variante, les moyens de verrouillage des pieds des supports de rail sur le châssis pourront alors être formés par des tenons, raccordés aux leviers de déverrouillages, à engager à l'intérieur de cavités prévues en correspondance dans les tiges creuses du châssis.

Dans une autre variante de l'invention, on pourra prévoir que le plan moyen de la surface d'appui de la plaquette du levier de déverrouillage soit constamment incliné par rapport au plan de la face d'accueil de la plate-forme d'un angle d'inclinaison supérieur à 10 degrés. Préférentiellement, par soucis ergonomique, cet angle d'inclinaison sera prévu pour rester constamment compris entre 0 et 45 degrés.

## Revendications

1. Support de rail (200) comportant :
- un pied (210) équipé de moyens de verrouillage (220) à un châssis (100) de coffret ou tableau de distribution électrique,
- une plate-forme (240) présentant une face d'accueil (241) d'un rail de montage (300) d'appareillages électriques modulaires,
- un levier de déverrouillage (230) qui est mobile entre une position de repos dans laquelle les moyens de verrouillage (220) sont en position pour verrouiller le pied (210) sur ledit châssis (100) et une position d'activation dans laquelle les moyens de verrouillage (220) sont en position pour libérer le pied (210) dudit châssis (100), et qui présente une surface d'appui (233) accessible au doigt de l'installateur pour déplacer le levier de déverrouillage (230) depuis sa position de repos jusqu'à sa position d'activation,
**caractérisé en ce que**, lorsque le levier de déverrouillage (230) est en position d'activation, ladite surface d'appui (233) et ladite face d'accueil (241) sont tournées dos-à-dos.

2. Support de rail (200) selon la revendication 1, dans lequel, ladite surface d'appui (233) s'étendant dans un premier plan moyen (P1) et ladite face d'accueil (241) s'étendant dans un second plan moyen (P2), lesdits premier et second plans moyens (P1, P2) sont inclinés l'un par rapport à l'autre d'un angle d'inclinaison (B1) qui est variable lorsque le levier de déverrouillage (230) se déplace depuis sa position de repos jusqu'à sa position d'activation et qui reste constamment compris entre 0 et 45 degrés.

3. Support de rail (200) selon la revendication 2, dans lequel ledit angle d'inclinaison (B1) est compris entre 0 et 10 degrés lorsque le levier de déverrouillage (230) est en position d'activation.

4. Support de rail (200) selon l'une des revendications 1 à 3, dans lequel ledit pied (210) comporte un coulisseau à engager dans ou sur un montant (111) du châssis (100).

5. Support de rail (200) selon la revendication 4, dans lequel lesdits moyens de verrouillage (220) du pied (210) sur le châssis (100) comportent des moyens pour bloquer la translation dudit coulisseau par rapport audit montant (111).

6. Support de rail (200) selon l'une des revendications 1 à 5, dans lequel lesdits moyens de verrouillage du pied (210) sur le châssis (100) comportent des moyens d'encliquetage (220) agencés pour coopérer avec des moyens d'encliquetage complémentaires (120) prévus en correspondance sur le châssis (100).

7. Support de rail (200) selon l'une des revendications 1 à 6, dans lequel ladite plate-forme (240) comporte des moyens de fixation (250) du rail de montage (300) sur ladite face d'accueil (241).

8. Support de rail (200) selon la revendication 7, dans lequel lesdits moyens de fixation (250) comportent :
- des moyens de crochetage (251) du rail de montage (300), et
- des moyens de blocage automatique (252, 254, 255) du rail de montage (300) en position crochetée sur ladite face d'accueil (241).

9. Support de rail (200) selon la revendication 8, dans lequel lesdits moyens de crochetage comportent deux crochets (251) pointant dans des directions parallèles, à engager dans deux premières ouvertures (351) du rail de montage (300).

10. Support de rail (200) selon l'une des revendications 8 et 9, dans lequel lesdits moyens de blocage automatique comportent une languette élastiquement déformable (252) à engager dans une seconde ouverture (352) du rail de montage (300) et dont un bord d'extrémité (253) est agencé pour prendre appui sur un bord correspondant (353) de ladite seconde ouverture (352) lorsque les moyens de crochetage (251) sont en position crochetée sur le rail de montage (300).

11. Support de rail (200) selon l'une des revendications 8 à 10, dans lequel lesdits moyens de blocage automatique comportent au moins une butée fixe (254, 255) agencée pour former un appui pour le rail de montage (300).

12. Support de rail (200) selon l'une des revendications 1 à 11, formé d'une seule pièce monobloc par moulage d'une matière plastique.

13. Coffret ou tableau de distribution électrique (100) comportant un châssis (100) et au moins un rail de montage (300) d'appareillages électriques modulaires, **caractérisé en ce qu'**il comporte au moins deux supports de rail (200) selon l'une des revendications 1 à 12, dont les moyens de verrouillage (220) sont verrouillés sur le châssis (100) et dont les plates-formes (240) accueillent chacune une extrémité dudit rail de montage (300).

## Patentansprüche

1. Schienenhalter (200), der umfasst:
- einen Fuß (210) mit Mittel zum Verriegeln (220) auf einem Gestell (100) für eine(n) elektrische(n) Verteilerkasten/-tafel,
- eine Plattform (240), die eine Aufnahmeseite (241) für eine Montageschiene (300) für modulare elektrische Geräte aufweist,
- einen Entriegelungshebel (230), der zwischen einer Ruheposition, in der die Verriegelungsmittel (220) in Position sind, um den Fuß (210) auf dem Gestell (100) zu verriegeln, und einer Aktivierungsposition, in der die Verriegelungsmittel (220) in Position sind, um den Fuß (210) vom Gestell (100) frei zu geben, und der eine für den Finger des Installateurs zugängliche Auflagefläche (233) aufweist, um den Entriegelungshebel (230) von seiner Ruheposition bis zu seiner Aktivierungsposition zu bewegen,
**dadurch gekennzeichnet, dass** wenn der Entriegelungshebel (230) in der Aktivierungsposition ist, die Auflagefläche (233) und die Aufnahmeseite (241) Rücken an Rücken sind.

2. Schienenhalter (200) nach Anspruch 1, bei dem, während sich die Auflagefläche (233) in einer ersten mittleren Ebene (P1) und die Aufnahmefläche (241) in einer zweiten mittleren Ebene (P2) erstrecken, diese erste und zweite mittlere Ebenen (P1, P2) zueinander um einen Neigungswinkel (B1) geneigt sind, der variabel ist, wenn sich der Entriegelungshebel (230) von seiner Ruheposition zu seiner Aktivierungsposition bewegt und der ständig zwischen 0 und 45 Grad liegt.

3. Schienenhalter (200) nach Anspruch 2, bei dem der Neigungswinkel (B1) zwischen 0 und 10 Grad liegt, wenn sich der Entriegelungshebel (230) in der Aktivierungsposition befindet.

4. Schienenhalter (200) nach einem der Ansprüche 1 bis 3, bei dem der Fuß (210) einen Schieber umfasst, der in oder auf einen Träger (111) des Gestells (100) eingreifen muss.

5. Schienenhalter (200) nach Anspruch 4, bei dem die Mittel zum Verriegeln (220) des Fußes (210) auf dem Gestell (100) Mittel zum Blockieren des Verschiebens des Schiebers in Bezug zum Träger (111) umfassen.

6. Schienenhalter (200) nach einem der Ansprüche 1 bis 5, bei dem die Mittel zum Verriegeln des Fußes (210) auf dem Gestell (100) Einrastmittel (220) umfassen, die angeordnet sind, um mit den komplementären Einrastmitteln (120) zusammenzuwirken, die in entsprechender Weise auf dem Gestell (100) vorgesehen sind.

7. Schienenhalter (200) nach einem der Ansprüche 1 bis 6, bei dem die Plattform (240) Mittel zur Befestigung (250) der Montageschiene (300) auf der Aufnahmeseite (241) umfasst.

8. Schienenhalter (200) nach Anspruch 7, bei dem die Befestigungsmittel (250) umfassen:
- Mittel zum Einhängen (251) der Montageschiene (300), und
- Mittel zum automatischen Blockieren (252, 254, 255) der Montageschiene (300) in der eingehängten Position auf der Aufnahmeseite (241).

9. Schienenhalter (200) nach Anspruch 8, bei dem die Einhängemittel zwei Haken (251) umfassen, die in parallele Richtungen zeigen und in zwei erste Öffnungen (351) der Montageschiene (300) eingreifen müssen.

10. Schienenhalter (200) nach einem der Ansprüche 8 und 9, bei dem die Mittel zum automatischen Blockieren eine elastisch verformbare Feder (252) umfassen, die in eine zweite Öffnung (352) der Montageschiene (300) eingreifen muss und deren ein Endrand (253) angeordnet ist, um auf einem entsprechenden Rand (353) der zweiten Öffnung (352) zum Aufliegen zu kommen, wenn die Einhängemittel (251) in eingehängter Position auf der Montageschiene (300) sind.

11. Schienenhalter (200) nach einem der Ansprüche 8 bis 10, bei dem die Mittel zum automatischen Blockieren mindestens einen festen Anschlag (254, 255) umfassen, der angeordnet ist, um für die Montageschiene (300) eine Stütze zu bilden.

12. Schienenhalter (200) nach einem der Ansprüche 1 bis 11, der durch Gussformen eines Kunststoffes aus einem einzigen Einzelblockteil hergestellt wird.

13. Elektrischer Verteilerkasten bzw. elektrische Verteilertafel (100) mit einem Gestell (100) und mindestens einer Montageschiene (300) für modulare elektrische Geräte, **dadurch gekennzeichnet, dass** er/sie mindestens zwei Schienenhalter (200) nach einem der Ansprüche 1 bis 12 umfasst, deren Mittel zum Verriegeln (220) auf dem Gestell (100) verriegelt sind und deren Plattformen (240) jeweils ein Ende der Montageschiene (300) aufnehmen.

## Claims

1. A rail support (200) comprising:
· an anchor (210) fitted with locking means (220) for locking to a frame (100) of an electrical panel or box;
· a platform (240) presenting a reception face (241) for receiving a mounting rail (300) for mounting modular electrical equipment; and
· an unlocking lever (230) that is movable between a rest position in which the locking means (220) are in a position for locking the anchor (210) on said frame (100), and an activated position in which the locking means (220) are in a position for releasing the anchor (210) from said frame (100), and that presents a presser surface (233) that can be accessed by an installer's finger for moving the unlocking lever (230) from its rest position to its activated position;
said rail support being **characterized in that** when the unlocking lever (230) is in its activated position, said presser surface (233) and said reception face (241) are arranged back-to-back.

2. A rail support (200) according to claim 1, wherein, for said presser surface (233) extending in a first mean plane (P1) and said reception face (241) extending in a second mean plane (P2), said first and second mean planes (P1, P2) slope relative to each other at a slope angle (B1) that varies when the unlocking lever (230) moves from its rest position to its activated position, and that remains constantly in the range 0 to 45°.

3. A rail support (200) according to claim 2, wherein said slope angle (B1) lies in the range 0 to 10° when the unlocking lever (230) is in its activated position.

4. A rail support (200) according to any one of claims 1 to 3, wherein said anchor (210) includes a slider for engaging in or on a mount (111) of the frame (100).

5. A rail support (200) according to claim 4, wherein said locking means (220) for locking the anchor (210) on the frame (100) comprise means for blocking movement in translation of said slider relative to said mount (111).

6. A rail support (200) according to any one of claims 1 to 5, wherein said locking means for locking the anchor (210) on the frame (100) comprise snap-fastener means (220) that are arranged to co-operate with complementary snap-fastener means (120) provided in correspondence on the frame (100).

7. A rail support (200) according to any one of claims 1 to 6, wherein said platform (240) includes fastener means (250) for fastening the mounting rail (300) on said reception face (241).

8. A rail support (200) according to claim 7, wherein said fastener means (250) comprise:
hook means (251) for hooking the mounting rail (300) ; and
· automatic blocking means (252, 254, 255) for automatically blocking the mounting rail (300) in the hooked position on said reception face (241).

9. A rail support (200) according to claim 8, wherein said hook means comprise two hooks (251) that point in parallel directions for engaging in two first openings (351) of the mounting rail (300).

10. A rail support (200) according to claim 8 or claim 9, wherein said automatic blocking means include an elastically-deformable tongue (252) for engaging in a second opening (352) of the mounting rail (300) and having an end edge (253) that is arranged to bear against a corresponding edge (353) of said second opening (352) when the hook means (251) are in their hooked position on the mounting rail (300).

11. A rail support (200) according to any one of claims 8 to 10, wherein said automatic blocking means include at least one stationary abutment (254, 255) that is arranged to form a bearing surface for the mounting rail (300).

12. A rail support (200) according to any one of claims 1 to 11, formed as a single part by molding a plastics material.

13. An electrical panel or box (100) comprising a frame (100) and at least one mounting rail (300) for mounting modular electrical equipment, said electrical panel or box being **characterized in that** it further comprises at least two rail supports (200) according to any one of claims 1 to 12, having locking means (220) that are locked on the frame (100), and having platforms (240) each receiving an end of said mounting rail (300).
